# EUROPEAN PATENT SPECIFICATION

(11) **EP 1 776 556 B1**
(45) Date of publication and mention of the grant of the patent: **16.07.2008**
(21) Application number: 05771152.5
(22) Date of filing: 07.07.2005
(51) Int. Cl.: G01B 11/00, B65G 47/22, B07C 5/342

(54) **DEVICE FOR MEASURING OR ORIENTING OBJECTS SUCH AS FRUITS AND THE LIKE**
VORRICHTUNG ZUM MESSEN ODER AUSRICHTEN VON OBJEKTEN WIE FRÜCHTEN UND ÄHNLICHEM
DISPOSITIF DE MESURE OU D'ORIENTATION D'OBJETS TELS QUE DES FRUITS OU LEUR EQUIVALENT

(30) Priority: 12.08.2004 BE 200400397
(43) Date of publication of application: 25.04.2007
(73) Proprietor: Coenen, Noel, 3800 Sint-Truiden (BE)
(72) Inventor: Coenen, Noel, 3800 Sint-Truiden (BE)
(74) Representative: Donné, Eddy
(86) International application number: PCT/BE2005/000111
(87) International publication number: WO 2006/015459

(56) References cited:
- GB-A- 1 303 764
- US-A- 3 945 489
- US-B1- 6 179 129

## Description

The present invention concerns a device for measuring or orienting objects such as fruits or the like, more particularly fruits such as for example apples, pears, tomatoes or peppers.

It is known to orient objects such as apples before packaging them. Thus, apples are preferably packaged in an orientation whereby the bloom of these apples is clearly visible and whereby the stalks of the different apples are directed according to a specific pattern in a packaging.

US 6,179,129 B1 discloses a device according to the preamble of claim 1.

GB 1 303 764 discloses a device for orienting fruits comprising a static holder with three balls, which can be rotated to orient the fruit.

Devices are already known which make it possible to orient objects such as apples, whereby these objects are separately placed on two parallel rollers which are subsequently rotated around their longitudinal axis, whereby the above-mentioned objects are turned in a single direction.

A rotation in a second direction is obtained with such known devices by raising the fruits by means of a socle, provided between the above-mentioned rollers, and by subsequently rotating it around its axis.

A disadvantage of such a known device is that two separate elements are required, more particularly the rollers and the socle, to orient an object in two different directions, what makes the embodiment of such a known device relatively complicated and expensive.

Another disadvantage of such a known device is that the objects cannot be provided well on the socle in many cases, as the bearing surface of this socle is smaller than the bearing surface of the rollers, for the simple reason that the socle must be able to move between the above-mentioned rollers.

Because of this smaller bearing surface of the socle, there is a relatively large risk that the object to be oriented will not lie stable on the socle and, as a consequence, will fall from the socle or will stagger on the socle, such that orienting it is made difficult or even impossible.

Another disadvantage is that the objects to be oriented always make contact with at least two different parts of the known device, which parts will have to be cleaned regularly, for example when being used in the food industry.

Moreover, providing an object to be oriented on the rollers and subsequently bringing that object into contact with the socle always implies a risk of damage of the object concerned, especially when this object is fragile or vulnerable, such as for example fruits.

The present invention aims to remedy one or several of the above-mentioned or other disadvantages.

To this end, the invention concerns a device for measuring or orienting fruits or the like which mainly consists of a transport system onto which is provided at least one holder, whereby at least three balls are provided in or on this holder onto which the object to be oriented can be provided, and of means which make it possible to rotate the above-mentioned balls.

An advantage of the device according to the invention is that the above-mentioned balls can be rotated in a variable direction, as a result of which an object to be oriented which is placed on these balls can be rotated in variable directions, and consequently can be provided in a correct orientation without being removed from the balls.

Another advantage of this device is that the object to be oriented always remains stable on the balls while being oriented.

Another advantage of the present device is that an object to be oriented only makes contact with the balls during the entire orientation process and only has to be provided once on these balls, as a result of which only the surface of the balls has to be cleaned regularly and as a result of which there is relatively little risk of damage for the object.

In order to better explain the characteristics of the present invention, the following device according to the invention for measuring or orienting objects such as fruits and the like is given as an example only without being limited in any way, with reference to the accompanying figures, in which:
figure 1 schematically represents a device according to the invention in perspective;
figure 2 represents a view according to arrow F2 in figure 1 to a larger scale;
figure 3 represents a section according to line III-III in figure 1;
figure 4 represents a section similar to that in figure 3, but in another operating position of the device;
figure 5 represents a variant of figure 1.

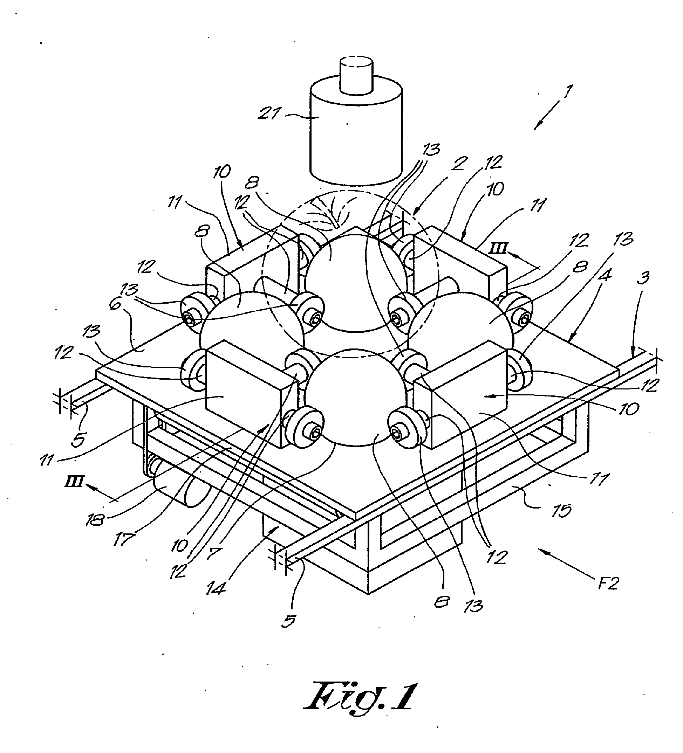

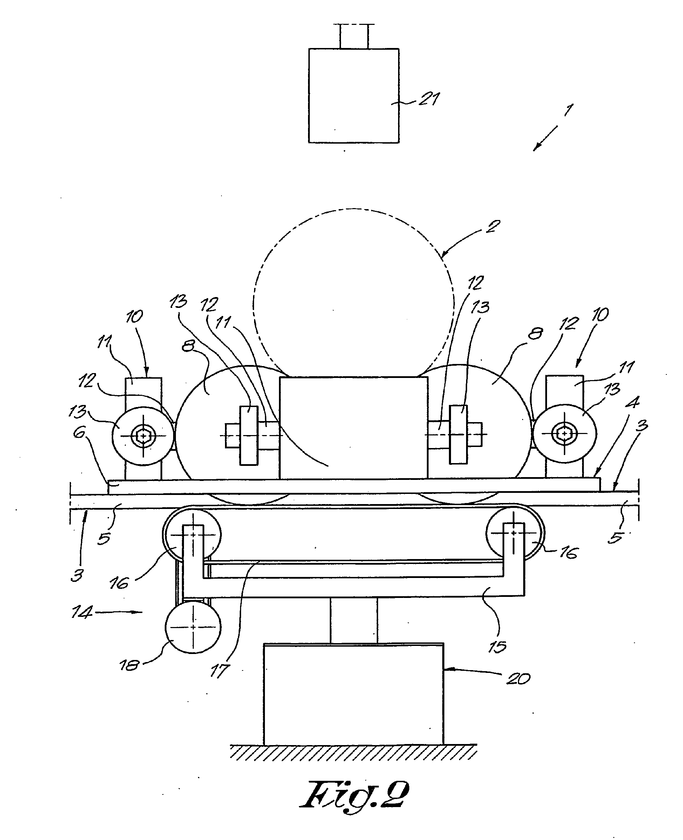

Figures 1 and 2 represent a device 1 according to the invention for measuring or orienting an object 2, which device 1 mainly consists of a transport system 3 onto which are fixed one or several holders 4 for the objects 2 to be oriented, in this case apples.

The transport system 3, which is represented very schematically in order to simplify the figures, in this case comprises two endless chains 5 which are placed parallel to each other at a mutual distance.

Between these endless chains 5 are fixed one or several holders 4, which holders 4 mainly consist of a base plate 6 in which are provided at least three, and in this case four holes 7 which are preferably situated at mutual equal distances on the angular points of a square.

In these holes 7 are placed balls 8 having a diameter which is larger than the diameter of the above-mentioned holes 7, such that the balls 8 can rest on the edge 9 of the above-mentioned holes 7.

For apples whose smallest diameter is situated between 65 mm and 95 mm, preferably four balls 8 are applied with a diameter of some 50 mm, whereby the holes 7 in the above-mentioned base plate 6 in this case have a diameter of about 40 mm.

On the base plate 6 are preferably provided different position holders 10 which prevent the balls 8 from rolling out of their respective holes 7.

These position holders 10 in this case consist of four protrusions 11 which are fixed to the base plate 7 and onto which are each time provided three diagonal shafts 12 which are each provided with a freely rotating wheel 13, such that each ball 8 is surrounded by four such wheels 13 on the top side of the base plate 6 which are positioned in a diamond-shaped pattern around each ball 8.

The above-mentioned balls 8 preferably have a soft outer surface in order to prevent the object 2 to be oriented from being damaged. Further, the outer surface is preferably not too smooth, such that the balls 8 have enough grip on the object 2.

To this end, the balls 8 are preferably made of a soft material, such as rubber or the like, or they are provided with a coating made of such a soft material.

According to the invention, means 14 are provided along the above-mentioned transport system 3 which make it possible to rotate the above-mentioned balls 8.

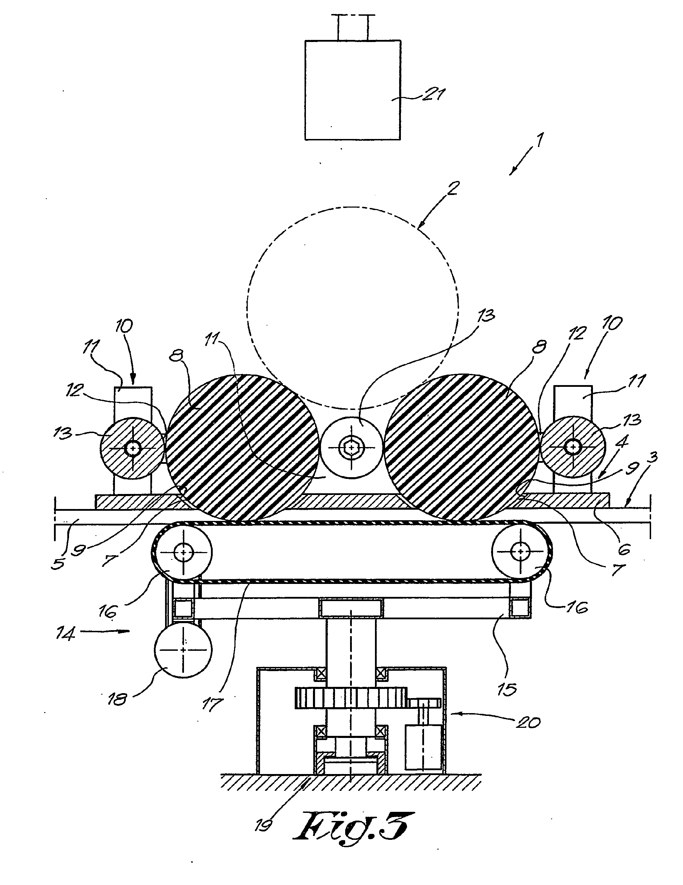

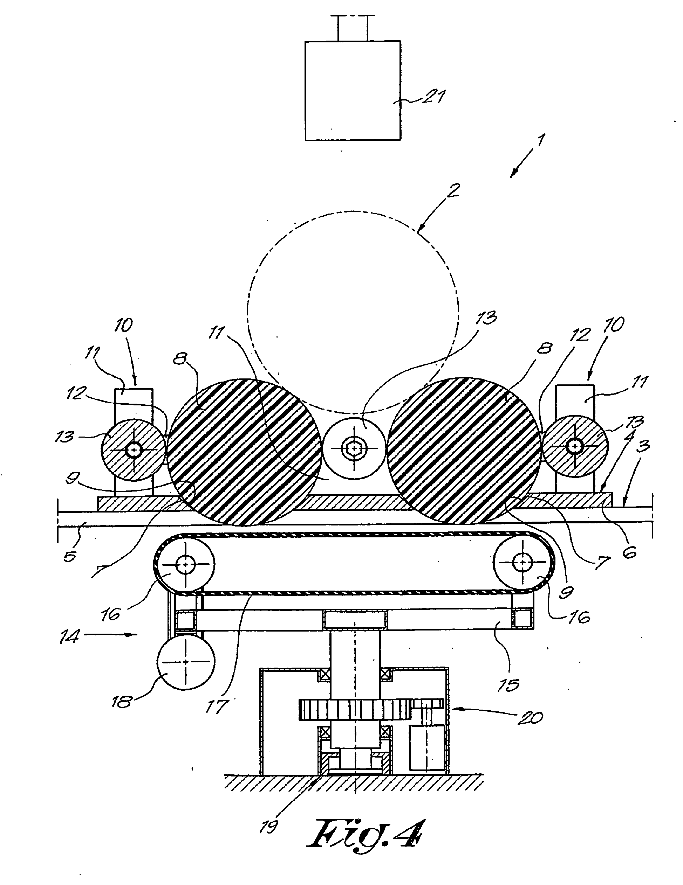

As is represented in figures 3 and 4, these means 14 in this case consist of a frame 15 in which are provided two rotatable rollers 16 around which is guided an endless belt 17.

Naturally, a drive 18 is provided for at least one of the above-mentioned rotatable rollers 16.

The frame 15 is preferably equipped with means which make it possible to move the frame 15 and consequently the endless belt 17 in a vertical direction, which means consist for example of a cylinder 19.

Further, the device 1 in the given embodiment is also provided with means which make it possible to rotate the above-mentioned frame 15 horizontally in relation to the holder 4 of the above-mentioned transport system 3, which means can be realised in the form of a gearing 20 or the like.

Above the transport system 3, at the height of the means 14 for rotating the balls 8, may optionally be provided a camera 21 or the like which makes it possible to make a picture of the object 2.

The working of the device 1 according to the invention is simple and as follows.

The object to be oriented 2 is placed on the balls 8 in the known manner, after which the holder 4 is moved above the means for rotating the balls 8 with the help of the transport system 3.

The balls 8 are then rotated by putting the above-mentioned cylinder 19 in an extended position, as a result of which the endless belt 17 makes contact with the lower side of the balls 8 and pushes them up somewhat, so that they no longer rest on the edge 9 of the above-mentioned holes 7 in the base plate 6.

By means of the drive 18, the endless belt 17 can then be revolved, as a result of which different balls 8 start to rotate which in turn make the object 2 revolve in a certain direction.

The rotation of the object 2 can hereby be followed by means of the above-mentioned camera 21 or the like, in order to map out the object 2 or to determine or control the exact rotation of the object 2.

In case the object 2 to be oriented is an apple, it is preferably rotated over at least 360° under the above-mentioned camera 21 in a first operational step, in order to map out the skin of the apple and the position of the stalk, after which the cylinder 19 is withdrawn and the contact between the balls 8 and the endless belt 17 is interrupted.

The recorded data are transmitted in the known manner from the camera 21 to a control box, which is not represented in the figures, and they are processed, whereby the angle and the distance over which the apple will have to be turned in a second operational step are determined, in order to position it in a desired orientation.

On the basis of these processed data, the control box can control the above-mentioned means 14 for making the balls 8 rotate, after which the endless belt 17, at the beginning of the second operational step, is turned at the calculated angle by means of the gearing 20 or the like and is then put into contact with the balls 8 by means of the cylinder 19.

The endless belt 17 is then driven for a certain while, until the object rotates over the calculated distance and consequently assumes its desired orientation.

This desired orientation can be either or not controlled by means of the above-mentioned camera 21 or the like.

When the object 2 has been entirely mapped out and/or when the object 2 has been brought in a desired orientation, the cylinder 19 is put in a withdrawn position 15 in which the endless belt 17 no longer makes contact with the above-mentioned balls 8.

As is represented in figure 4, in this position of the frame 15, the balls 8 rest on the edge 9 of the above-mentioned holes 7, whereby a possible rotation of the balls 8 is prevented by the friction between the outer surface of the balls 8 and the edge 9 of the holes 7.

It is clear that, in a device according to the invention, two means 14 for rotating the balls 8 can be provided along the above-mentioned transport system 3, whereby the first is applied in order to map out the object 2, and the second is applied to rotate the object 2 in a desired orientation.

It is also clear that, in order to orient the object 2, two frames 15 with an endless belt 17 can be applied, whereby both endless belts 17 rotate in a different direction.

Such an embodiment is advantageous in that the different frames 15 do not have to be equipped with means which make it possible to rotate the frame 15 horizontally, as a result of which they can be realised in a simpler and consequently a cheaper manner.

Further, it should be noticed that instead of rotating the frame 15, also the holder 4 itself can be rotated in relation to the frame 15.

It is also possible to realise the means for rotating the balls 8 in the form of a plate which, by means of the above-mentioned cylinder 19, can be vertically moved between a withdrawn position, whereby the plate does not make contact with the balls 8, and an extended position, whereby the balls 8 rest on the plate.

In that case, the object 2 can be rotated around a shaft which is diagonal to the transport device of the holder 4, by moving the plate up against the balls 8, while the transport system 3 moves the holder 4 over the plate, whereby the balls 8 rotate.

In order to rotate the object 2 around a shaft parallel to the transport device, it is clear that also the plate must be equipped with means which make it possible to move it in a crosswise sense in relation to the transport device when it makes contact with the above-mentioned balls 8. Such means are well known in the field of machine building, and hence they will not be further described.

After the object 2 has been oriented in this manner, the plate is vertically moved by drawing in the cylinder 19, whereby de balls 8 are slowed down against the edge 9 of the holes 7 in the holder 4 and are brought to a standstill.

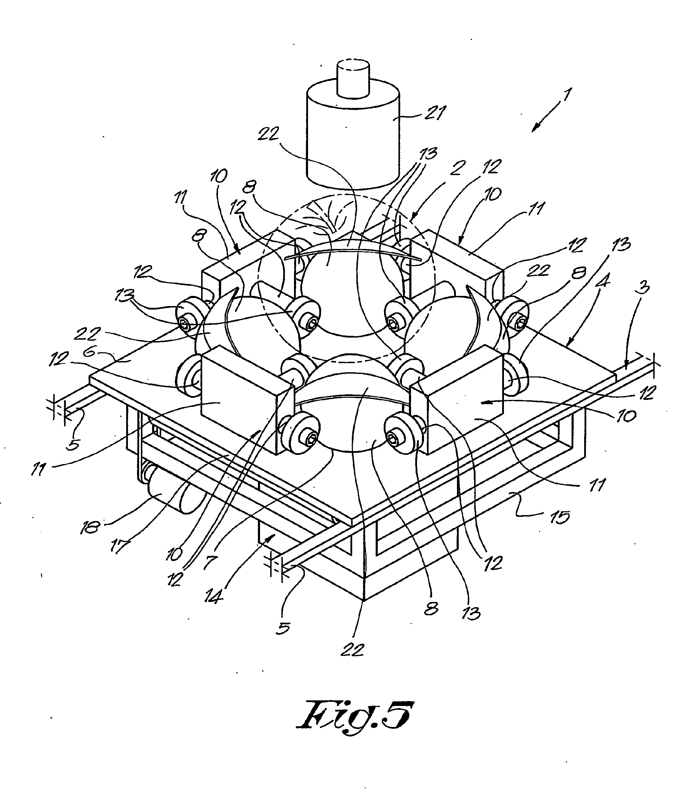

Figure 5 represents a variant whereby, between the above-mentioned position holders 10, strips 22 or the like are provided which extend freely over the balls 8.

Such strips 22 or the like prevent the balls 8 from dropping out of the holder 4 when the latter is turned round at the end of the transport system 3.

The present invention is by no means limited to the above-described embodiments represented in the accompanying drawings; on the contrary, such a device for measuring or orienting objects, such as fruits or the like, can be realised according to different variants while still remaining within the scope of the invention, which is defined by the appended claims.

## Claims

1. Device for measuring or orienting objects, such as fruits or the like, which mainly consists of a transport system (3) onto which is provided at least one holder (4), **characterised in that** in or on this holder (4) are provided at least three balls (8) onto which the object (2) to be oriented can be provided, and of means (14) which make it possible to rotate the above-mentioned balls (8).

2. Device according to claim 1, **characterised in that** the holders (4) mainly consist of a base plate (6) in which a hole (7) is provided for each ball (8) having a diameter which is smaller than the diameter of the ball (8) concerned.

3. Device according to claim 2, **characterised in that** different position holders (10) are provided on the base plate (6) comprising wheels (13) which are positioned next to the above-mentioned balls (8).

4. Device according to claim 3, **characterised in that** the position holders (10) contain strips (22) or the like extending over the balls (8).

5. Device according to claim 1, **characterised in that** each holder (4) is provided with four balls (8).

6. Device according to claim 1, **characterised in that** at least the outer perimeter of the balls (8) is made of a soft material.

7. Device according to claim 1, **characterised in that** the above-mentioned means (14) for rotating the balls (8), mainly consist of a frame (15) with two or more rotatable rollers (16) around which is guided an endless belt (17).

8. Device according to claim 7, **characterised in that** the above-mentioned frame (15) is provided with means which make it possible to move the frame (15) vertically.

9. Device according to claim 7, **characterised in that** the frame (15) is provided with means which make it possible to move the frame (15) horizontally in relation to the above-mentioned holder (4).

10. Device according to claim 1, **characterised in that** the above-mentioned means for rotating the balls (8) consist of a plate which is provided with means which make it possible to move the plate vertically.

11. Device according to claim 1, **characterised in that**, at the height of the means for rotating the balls (8) which are positioned along the above-mentioned transport system (3), a camera (21) or the like is provided.

## Patentansprüche

1. Vorrichtung zum Messen oder Ausrichten von Objekten, wie etwa Früchten oder ähnlichem, welche im Wesentlichen aus einem Transportsystem (3) besteht, worauf mindestens eine Halterung (4) angebracht ist, **dadurch gekennzeichnet, dass** in oder an dieser Halterung (4) mindestens drei Kugeln (8) vorgesehen sind, worauf das auszurichtende Objekt (2) angebracht werden kann, und aus Mitteln (14) besteht, die es ermöglichen, die vorgenannten Kugeln (8) zu rotieren.

2. Vorrichtung nach Anspruch 1, **dadurch gekennzeichnet, dass** die Halterungen (4) im Wesentlichen aus einer Grundplatte (6) bestehen, worin für jede Kugel (8) ein Loch (7) vorgesehen ist, mit einem Durchmesser, der kleiner als der Durchmesser der betreffenden Kugel (8) ist.

3. Vorrichtung nach Anspruch 2, **dadurch gekennzeichnet, dass** verschiedene Positionshalterungen (10) an der Grundplatte (6) angebracht sind, die Räder (13) umfassen, die neben den vorgenannten Kugeln (8) positioniert sind.

4. Vorrichtung nach Anspruch 3, **dadurch gekennzeichnet, dass** die Positionshalterungen (10) Streifen (22) oder dergleichen enthalten, die sich über die Kugeln (8) erstrecken.

5. Vorrichtung nach Anspruch 1, **dadurch gekennzeichnet, dass** jede Halterung (4) mit vier Kugeln (8) versehen ist.

6. Vorrichtung nach Anspruch 1, **dadurch gekennzeichnet, dass** mindestens der Außenumfang der Kugeln (8) aus einem weichen Material hergestellt ist.

7. Vorrichtung nach Anspruch 1, **dadurch gekennzeichnet, dass** die vorgenannten Mittel (14) zum Rotieren der Kugeln (8) im Wesentlichen aus einem Gestell (15) mit zwei oder mehr verdrehbaren Rollen (16) bestehen, um die ein Endlosband (17) geführt ist.

8. Vorrichtung nach Anspruch 7, **dadurch gekennzeichnet, dass** das vorgenannte Gestell (15) mit Mitteln versehen ist, die es ermöglichen, das Gestell (15) vertikal zu bewegen.

9. Vorrichtung nach Anspruch 7, **dadurch gekennzeichnet, dass** das Gestell (15) mit Mitteln versehen ist, die es ermöglichen, das Gestell (15) in Bezug auf die vorgenannte Halterung (4) horizontal zu bewegen.

10. Vorrichtung nach Anspruch 1, **dadurch gekennzeichnet, dass** die vorgenannten Mittel zum Rotieren der Kugeln (8) aus einer Platte bestehen, die mit Mitteln versehen ist, die es ermöglichen, die Platte vertikal zu bewegen.

11. Vorrichtung nach Anspruch 1, **dadurch gekennzeichnet, dass**, auf Höhe der Mittel zum Rotieren der Kugeln (8), die entlang dem vorgenannten Transportsystem (3) positioniert sind, eine Kamera (21) oder dergleichen vorgesehen ist.

## Revendications

1. Dispositif pour mesurer ou pour orienter des objets, tels que des fruits ou analogues, qui est constitué principalement par un système de transport (3) sur lequel on prévoit au moins un dispositif de maintien (4), **caractérisé en ce que** dans ou sur ce dispositif de maintien (4), on prévoit au moins trois boules (8) sur lesquelles on peut disposer l'objet qui doit être orienté, et par des moyens (14) qui permettent de faire tourner les boules susmentionnées (8).

2. Dispositif selon la revendication 1, **caractérisé en ce que** les dispositifs de maintien (4) sont constitués principalement d'une plaque de base (6) dans laquelle on prévoit un trou (7) pour chaque boule (8), dont le diamètre est inférieur au diamètre de la boule (8) en question.

3. Dispositif selon la revendication 2, **caractérisé en ce que** différents dispositifs de maintien de position (10) sont prévus sur la plaque de base (6) comprenant des roues (13) qui sont disposées à côté des boules susmentionnées (8).

4. Dispositif selon la revendication 3, **caractérisé en ce que** les dispositifs de maintien de position (10) contiennent des bandes (22) ou analogues s'étendant par-dessus les boules (8).

5. Dispositif selon la revendication 1, **caractérisé en ce que** chaque dispositif de maintien (4) est muni de quatre boules (8).

6. Dispositif selon la revendication 1, **caractérisé en ce qu'**au moins le périmètre externe des boules (8) est constitué d'une matière tendre.

7. Dispositif selon la revendication 1, **caractérisé en ce que** les moyens susmentionnés (14) pour faire tourner les boules (8) sont constitués principalement dans le cadre (15) comportant deux galets rotatifs ou plus (16) autour desquels est guidée une courroie sans fin (17).

8. Dispositif selon la revendication 7, **caractérisé en ce que** le cadre susmentionné (15) est muni de moyens qui permettent de déplacer le cadre (15) en direction verticale.

9. Dispositif selon la revendication 7, **caractérisé en ce que** le cadre (15) est muni de moyens qui permettent de déplacer le cadre (15) en direction horizontale par rapport aux dispositifs de maintien susmentionnés (4).

10. Dispositif selon la revendication 1, **caractérisé en ce que** les moyens susmentionnés pour faire tourner les boules (8) sont constitués d'une plaque qui est munie de moyens qui permettent de déplacer la plaque en direction verticale.

11. Dispositif selon la revendication 1, **caractérisé en ce que**, à hauteur des moyens destinés à faire tourner les boules (8), qui sont disposés le long du système de transport susmentionné (3), on prévoit une caméra (21) ou analogue.
